# EUROPEAN PATENT APPLICATION

(11) **EP 4 432 138 A1**
(43) Date of publication of application: **18.09.2024**
(21) Application number: 23162676.3
(22) Date of filing: 17.03.2023
(51) Int. Cl.: G06F 21/10, G05B 15/02, G06Q 50/06, H04L 9/32

(54) **LICENSABLE SUBSTATION CONFIGURATION PARAMETERS**

(71) Applicant: ABB Schweiz AG, 5400 Baden (CH)
(72) Inventor: BIRKE, Robert René Maria, 8802 Kilchberg (CH); KOZHAYA, David, 8953 Dietikon (CH); SCHOENBORN, Sandro, 4059 Basel (CH)
(74) Representative: Zimmermann & Partner Patentanwälte mbB

(57) **Abstract**

This disclosure provides a substation (10) having a virtualized relay (200) for operating the substation (10) with a set of actual configuration parameters (210), and a licensing module (300) being configured for: verifying a consistency between the set of actual configuration parameters (210) and a set of licensed configuration parameters (310), blocking operation of the virtualized relay (200) with the set of actual configuration parameters; and releasing operation of the virtualized relay (200) with the set of actual configuration parameters upon successful verification of the consistency. Further, this disclosure provides a method for operating a substation and the use of a licensing module according to the disclosure in a substation.

## Description

### TECHNICAL FIELD

This disclosure relates to a substation, to a method for operating a substation and to the use of a licensing module according to this disclosure in a substation.

### BACKGROUND

Substations are essential components of power grids and serve for power transmission and/or power distribution from power plants to end-users or industry. Protection and control functions are typically run by substation relays to ensure a safe, reliable and efficient power flow.

There is a growing trend in the use of virtualized relays in substations. Virtualized relays provide a number of advantages over traditional hardware-based relays. For example, virtualized relays are typically more flexible, easier to deploy, and less expensive to maintain than hardware-based relays.

However, the adoption of virtualized relays in substations raises some challenges. In particular, a software license is often tied to specific hardware configurations of the substation using unique hardware identifiers. Running virtual instances of software, e.g., via virtual machines (VM), may include the problem that specific hardware components including their unique hardware identifiers are cloned or emulated. Thereby, the authorization of the software license may be compromised.

An approach to authorize operation of the virtualized relay may be the use of a licensing scheme using a license server. However, such a license server is a software-instance itself and may lead to similar issues to protect it from unauthorized manipulation as the virtualized relay. Hence, they are often provided as dedicated hardware boxes or cloud services that require an extra dedicated appliance. Further, substations may be located at remote sites where a reliable internet connection is not necessarily provided and/or it may be undesirable to establish an internet connection for the virtualized relay due to security concerns.

Operating a virtualized relay in a different than an anticipated environment may lead to substation and/or power grid failures, catastrophic damages to the substation and/or even to human beings. Thus, it is highly safety-critical to substations that the virtualized relay is operated in the anticipated environment.

### SUMMARY

Aspects and advantages of the disclosure will be set forth in part in the following description, or may be evident from the description or may be learned through practice of the disclosure.

The present disclosure provides a substation with a virtualized relay and a licensing module for ensuring operation of the virtualized relay in an anticipated environment.

In one example, the disclosure provides a substation having a virtualized relay for operating the substation with a set of actual configuration parameters, and a licensing module being configured for verifying a consistency between the set of actual configuration parameters and a set of licensed configuration parameters, blocking operation of the virtualized relay with the set of actual configuration parameters, and for releasing operation of the virtualized relay with the set of actual configuration parameters upon successful verification of the consistency.

In another example, the disclosure provides a method for operating a substation, being configured by a set of actual configuration parameters, including the steps of verifying a consistency between the set of actual configuration parameters and a set of licensed configuration parameters, upon successful consistency verification, confirming validity of a software license, thereby releasing operation of a virtualized relay of the substation, and operating the virtualized relay with the set of actual configuration parameters.

In yet another example, the disclosure provides use of a licensing module according to this disclosure in a substation.

The details of one or more aspects of the disclosure are set forth in the accompanying drawings and the description below. Other features, objects, and advantages of the techniques described in this disclosure will be apparent from the description and drawings, and from the claims.

### BRIEF DESCRIPTION OF DRAWINGS

A full and enabling disclosure of the present disclosure is set forth in the specification, which makes reference to the appended figures, in which:
FIG. 1 is a schematic diagram illustrating a control architecture of a substation according to embodiments of this disclosure.
FIG. 2 is a conceptual diagram of a control architecture of a substation with a licensing module having a memory according to embodiments of this disclosure.
FIG. 3 is a schematic diagram of a control architecture of a substation with a virtualized relay including an actual adjusting authority according to embodiments of this disclosure.

### DETAILED DESCRIPTION

This disclosure generally relates to a substation governed by a set of protection and control applications, whose operation is bound to a licensing scheme, an official permission to use the application or features of the application, that utilizes the high degree of customization of the substation as a fingerprint. The licensing scheme for the substation according to this disclosure may be combined with other known licensing schemes due to an orthogonal mode of operation to increase the provided protection against unauthorized use and/or manipulation of the application or features of the application. A substation operating according to this disclosure verifies a consistency between a set of actual configuration parameters and a set of licensed configuration parameters in order to ensure operation in an anticipated environment. In some examples, the substation has a memory having stored thereon a cryptographic proof being based on the set of licensed configuration parameters for verifying the consistency to the set of actual configuration parameters.

In general, this disclosure describes a substation having a virtualized relay for operating the substation with a set of actual configuration parameters such as at least two actual configuration parameters but typically more than 8 actual configuration parameters, preferably more than 10 actual configuration parameters, particularly preferably more than 12 actual configuration parameters. As used herein, the term "virtualized relay" may refer to a software substitute for one or more hardware-based relays. The use of the virtualized relay instead of one or more hardware-based relays may serve, e.g., to centralize the set of protection and control applications. In particular, the virtualized relay may be a software instance running on a hardware device such as a computer, a server, a distributed network, such as a cloud, or alike. The software instance may run in a virtual machine environment. The substation is protected from manipulation, in particular from running the substation with a manipulated set of actual configuration parameters on the substation by *inter alia* providing a licensing module. The licensing module is configured for verifying a consistency between the set of actual configuration parameters and a set of licensed configuration parameters. A number of licensed configuration parameters may be smaller than a number of actual configuration parameters. Further, the licensing module is configured for blocking operation of the virtualized relay with the set of actual configuration parameters, e.g., until successful verification of the consistency. The licensing module is configured for releasing operation of the virtualized relay with the set of actual configuration parameters upon verification of the consistency.

According to embodiments, blocking operation of the virtualized relay with the set of actual configuration parameters may refer to blocking operation of the virtualized relay partially, i.e. blocking operation of specific protection and control applications or similar that may refer to the set of actual configuration parameters while still enabling operation of the virtualized relay and of the substation with fundamental protection and control applications. Such embodiments may increase the reliability of the power grid. According to embodiments, certain protection and control applications may be blocked according to a consequence plan, i.e. step-by-step including warnings to an operator of the substation and/or an increasing number of blocked functionalities.

In embodiments, the licensing module may be integrated into the virtualized relay and/or into the substation. The licensing module may be integrated into a hardware component of the substation. According to embodiments, the licensing module may be embedded in a protection and control software of the virtualized relay. The protection and control software may include the set of actual configuration parameters. The licensing module itself may be secured from manipulation by any securing method for licensing modules such as the use of a trusted hardware module, encryption techniques or alike. According to embodiments, a secure hardware chip such as a processor including Software Guard Extensions, a Trusted Platform Module or similar may be used to secure the licensing module against manipulation. For example, a secure boot process based on verification with the processor including Software Guard Extensions, the Trusted Platform Module or similar may be implemented.

In embodiments, the licensing module may have a memory having stored thereon a cryptographic proof. The memory may preferably be arranged at the substation such that an offline connection between the virtualized relay and/or the licensing module and the memory may be established. Such embodiments may enable an independence from an internet connection. The cryptographic proof may be generated using the set of licensed configuration parameters. In some embodiments, the cryptographic proof may be generated using a subset of the set of licensed configuration parameters. The licensing module may further include a verification unit that may be configured for verifying the consistency between the set of actual configuration parameters and the cryptographic proof. Such embodiments may provide an increased protection from unauthorized manipulation.

According to embodiments, the cryptographic proof may be based on asymmetric cryptography. In embodiments, the cryptographic proof may be based on at least one public key and at least one corresponding private key. Each public key of the at least one public key may have a corresponding private key from the at least one private key. The at least one public key and the corresponding at least one private key may be, in particular mathematically, related to each other. A pair of the at least one public key and the corresponding at least one private key may be generated using a cryptographic method such as RSA algorithm, digital signature algorithm, elliptic-curve cryptography or alike. Such embodiments may provide an increased integrity and confidentiality. The at least one public key may be stored on the memory. The at least one private key may be kept secure by the issuer of the license such as the manufacturer and/or an authority.

In embodiments, the cryptographic proof may include at least one signature being generated using the at least one private key. The at least one private key may sign the set of licensed configuration parameters to obtain the signature. The verification unit may further include a decryption unit. The decryption unit may be configured for decrypting the at least one signature using the corresponding at least one public key.

According to embodiments, the at least one signature may include at least one licensed identifier. In embodiments, the at least one licensed identifier may be a licensed hash identifier. As used herein, the term "licensed hash identifier" refers to an identifier that is generated using a hash-function. The at least one licensed identifier may be based on the set of licensed configuration parameters. The at least one licensed identifier may be encrypted by the at least one private key. The verification unit may further be configured for comparing at least one actual identifier to the at least one licensed identifier. The at least one actual identifier may be an actual hash identifier. The at least one actual identifier may be based on the set of actual configuration parameters.

The term "identifier", as used herein, may refer to a specific value, such as a specific hash value or alike. A plurality of licensed identifiers and a plurality of actual identifiers may be used for enabling a plurality of licensed adjusting authorities to set one or more licensed configuration parameters so as to increase the protection against unauthorized manipulation of the set of licensed configuration parameters. A licensed adjusting authority may refer to an engineering department, to an engineering tool, to an interface or similar. The plurality of licensed adjusting authorities may have different capabilities for setting the one or more licensed configuration parameter. In embodiments, a licensed root authority may be authorized to set each of the one or more licensed configuration parameters.

In embodiments, a plurality of pairs of public keys and private keys is provided. For example, each of the plurality of licensed adjusting authorities may have a private key of the plurality of pairs of public keys and private keys. According to embodiments, each of the public keys of the plurality of pairs of public keys and private keys may be stored on the memory. An authorization list may include each of the public keys. The authorization list may further include an assignment of each of the public keys to the one more licensed configuration parameters. According to embodiments, the authorization list is signed by the licensed root authority. The authorization list may be stored on the memory.

In embodiments, the virtualized relay and/or the licensing module may have a start-up routine that may be configured for resetting the licensing module to blocking operation of the virtualized relay with the set of actual configuration parameters. Alternatively or additionally, the virtualized relay may have an operation routine that may be configured for querying and receiving verification of the consistency from the licensing module during operation of the substation. In embodiments, the operation routine may periodically during operation of the substation query and receive verification of the consistency from the licensing module. Such embodiments may increase the protection from unauthorized manipulation of the set of actual configuration parameters.

According to embodiments, the set of licensed configuration parameters may be a subset of a total set of configuration parameters of the substation. Such embodiments enable setting one or more actual configuration parameters that may be crucial for a smooth operation of the substation and that may be difficult to be set in advance.

In embodiments, the set of licensed configuration parameters may include at least one parameter that is related to a physical setup of the substation as part of a distribution grid. Such a parameter being related to the physical setup of the substation as part of the distribution grid may be a parameter such as a voltage level, a number of bays of the substation, a type of a bay of the substation, a stream name, a nominal current, a controlled power, a network setup such as Parallel Redundancy Protocol (PRP), High-availability Seamless Redundancy (HSR), no redundancy or similar, a grid frequency or alike.

The set of licensed configuration parameters may additionally or alternatively include at least one parameter that is related to settings and configurations of the protection and control applications of the substation. Such a parameter being related to settings and configurations of protection and control applications of the substation may be a parameter such as a list of active protection and/or control functions and/or active measurement functions, a number of active protection and/or control functions and/or active measurement functions, a setting of a function such as, e.g., a threshold, a pick up timing setting, a time characteristic, a Precision Time Protocol Grandmaster identification, a published and received signal, e.g., communicated in Generic Object Oriented Substation Events (GOOSE) messages or in IEC 61850 data model.

Such embodiments, in particular such embodiments having a plurality of parameters being related to the physical setup of the substation as part of a distribution grid and a plurality of parameters being related to settings and configurations of protection and control applications of the substation, provide a high protection from unauthorized manipulation since these parameters are highly specific for the substation. Additionally, the set of licensed configuration parameters may include at least one parameter being related to further components of the substation such as a MAC-address, a serial number of the further component, a CPU information, a Universally Unique Identifier (UUID) of a virtual environment, a firmware version or alike.

According to embodiments, at least one parameter of the set of licensed configuration parameters may be a value, a range of values or a list of values. A value may be a string, an integer or alike.

In embodiments, the set of licensed configuration parameters may include at least one adjustable licensed configuration parameter. For example, at least one actual adjusting authority may be configured for adjusting at least one corresponding adjustable actual configuration parameter.

According to embodiments, the licensing module may further be configured for verifying that the at least one actual adjusting authority corresponds to a licensed adjusting authority.

In embodiments, the virtualized relay may include a human-machine-interface. The human-machine-interface may be a web-browser based human-machine-interface. According to embodiments, the virtualized relay may include an adaptive control unit. The human-machine-interface and/or the adaptive control unit may be an actual adjusting authority being configured for adjusting the at least one adjustable actual configuration parameter.

Reference now will be made in detail to embodiments of the disclosure, some examples of which are illustrated in the drawings. Each example may be provided by way of explanation of the disclosure, not limitation of the disclosure. For instance, features illustrated or described as part of embodiments may be used with other embodiments to yield still further embodiments. The drawings may not be true-to-scale.

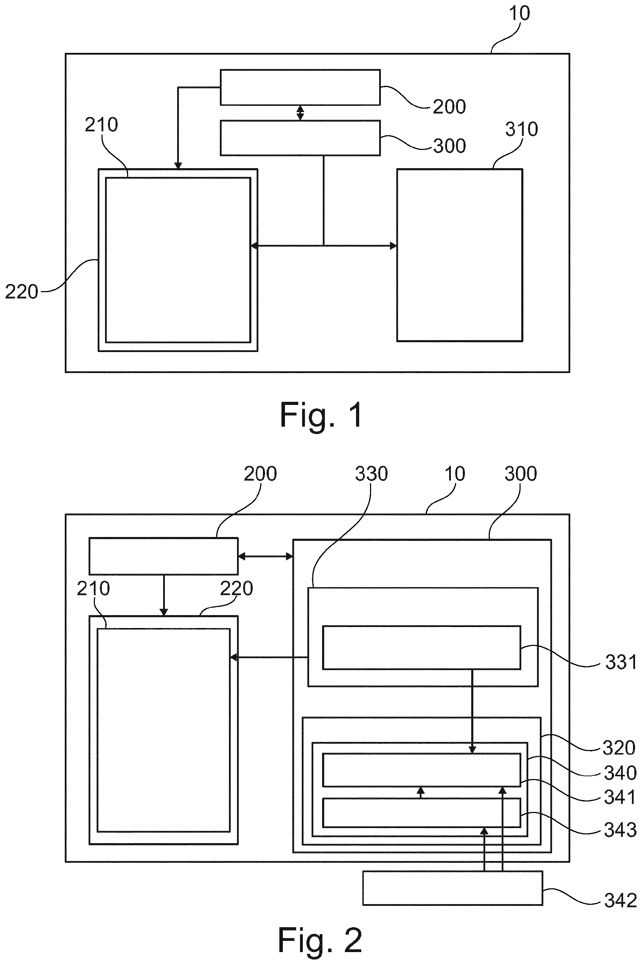

FIG. 1 shows a schematic diagram of control architecture of a substation 10 according to embodiments of the disclosure. The substation 10 has a virtualized relay 200 for operating the substation 10 with a set of actual configuration parameters 210. The set of actual configuration parameters 210 includes, e.g., a number of bays of the substation 10, a name of a bay, a number of running protection functions on the bay, a control function for a motor including a motor starting current and a permitted stalling time range.

The substation 10 further has a licensing module 300. The licensing module 300 may be implemented on the same hardware as the virtualized relay 200 and may be realized by a software function. The licensing module 300 is configured for verifying a consistency between the set of actual configuration parameters 210 and a set of licensed configuration parameters 310. The set of licensed configuration parameters 310 includes also a number of bays of the substation 10, a name of a bay, a number of running protection functions on the bay, a control function for a motor including a motor starting current and a permitted stalling time range. The set of licensed configuration parameters 310 is provided by a license provider. The set of licensed configuration parameters 310 is in this example a subset of a total set of configuration parameters 220 of the substation 10. The set of actual configuration parameters 210 corresponds to the subset of the total set of configuration parameters of the substation 220.

The licensing module 300 is configured for blocking operation of the substation 10 with the set of actual configuration parameters. Upon successful verification of the consistency the licensing module 300 releases operation of the virtualized relay 200 such that the substation 10 is operated with the set of actual configuration parameters 210. For example, the licensing module 300 may confirm that the name of the bay given in the set of actual configuration parameters 210 corresponds to the name of the bay given in the set of licensed configuration parameters 310.

If the licensing module 300 checks the set of actual configuration parameters 210 and detects that the number of bays given from the set of actual configuration parameters 210 is different to the number of bays given from the set of licensed configuration parameters 310 the licensing module 300 continues to block operation of the virtualized relay 200 and thus of the substation 10.

Referring now to FIG. 2 showing a structure diagram of a control architecture of a substation 10 with a licensing module 300 having a memory 320 according to embodiments, a substation 10 has a virtualized relay 200 and the licensing module 300 as already described in conjunction with Fig. 1. The licensing module 300 further has a verification unit 330. A cryptographic proof 340 is stored on the memory 320. The cryptographic proof 340 is a signature 341. The signature 341 is a licensed hash identifier being encrypted by RSA using a private key 342. The licensed hash identifier is an output of a hash-function with the set of licensed configuration parameters 310 as input. The verification unit 330 has a decryption unit 331.

For example, the cryptographic proof 340 is generated by a license provider. The license provider may check in an engineering phase whether the set of licensed configuration parameters 310 corresponds to internal specifications of the license provider using a signing server. The signing server may be connected to the internet. If a consistency of the set of licensed configuration parameters 310 to the internal specifications is verified by the signing server, the signing server encrypts the output of the hash-function with the set of licensed configuration parameters 310 as input using the private key 342. The cryptographic proof 340 and a public key 343, being mathematically related to the private key 342, are stored on the memory 320.

The virtualized relay 200 has a start-up routine. For operating the substation 10, the start-up routine sets the licensing module 300 to blocking operation of the virtualized relay 200 with the set of actual configuration parameters. The virtualized relay 200 queries from the licensing module 300 verification of a consistency between the set of actual configuration parameters 210 and the cryptographic proof 340. The decryption unit 331 decrypts the signature 341 by using the public key 343 being stored on the memory 320. An internet connection is not required for the operation of the substation 10.

The verification unit 330 obtains the licensed hash identifier from the decryption unit 331. The verification unit 330 further generates an actual hash identifier by applying the hash-function to the set of actual configuration parameters 210. The actual hash identifier is then compared to the licensed hash identifier. If they are identical, the virtualized relay 200 receives verification of the consistency from the licensing module 300 in terms of releasing operation.

To protect the substation 10 from unauthorized manipulation during operation of the substation 10, the virtualized relay 200 has an operation routine that is querying and receiving verification of the consistency from the licensing module 300 periodically, e.g. every at most 60 seconds, in particular every at most 6 hours, at most 24 hours or at most 7 days.

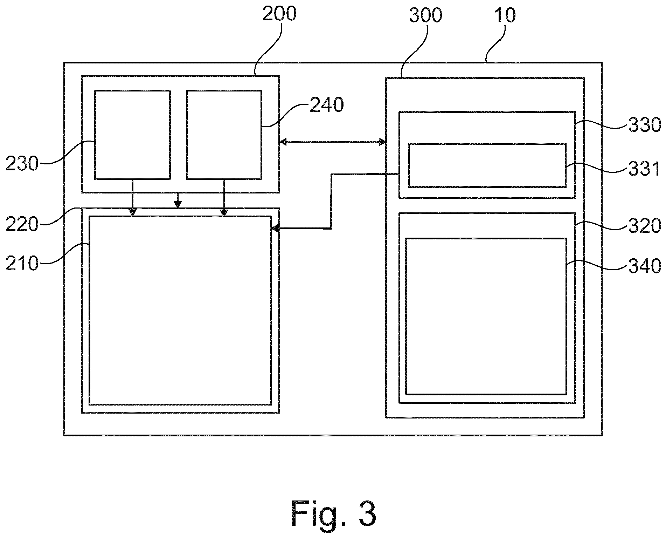

Referring now to FIG. 3 showing a schematic diagram of a control architecture of a substation with a virtualized relay 200 including an actual adjusting authority according to embodiments of the disclosure, a set of licensed configuration parameters 310 includes a first adjustable licensed configuration parameter. The virtualized relay 200 has a human-machine-interface 230 being an actual adjusting authority for adjusting a first adjustable actual configuration parameter corresponding to the first adjustable licensed configuration parameter. The first adjustable actual configuration parameter is a stream name. For example, using the human-machine-interface 230, the stream name can be adjusted.

The human-machine-interface 230 is further configured for generating a first actual hash identifier using the first adjustable actual configuration parameter and for encrypting the first actual hash identifier with a first private key. The corresponding first public key is stored on a memory 320.

A verification unit 330 verifies a consistency between the set of actual configuration parameters 210 including the first adjustable actual configuration parameter and a set of licensed configuration parameters 310 including the first adjustable licensed configuration parameter by verifying pieces of the set of the actual configuration parameters 210 according to an authorization list.

The authorization list may include a plurality of public keys wherein each public key may be assigned to one or more pieces of the set of licensed configuration parameters 310. The authorization list is also stored on the memory 320 and may be part of a cryptographic proof 340.

The human-machine-interface 230 is authorized by the authorization list to encrypt the first adjustable actual configuration parameter using the first private key by including the first public key. The human-machine-interface 230 thus corresponds to a licensed adjusting authority.

The verification unit 330 may verify the consistency between the set of actual configuration parameters 210 and the set of licensed configuration parameters 310 piece by piece. Thus, the first adjustable actual configuration parameter may be verified as a piece of the set of licensed configuration parameters 310 that is assigned to the first public key according to the authorization list.

The virtualized relay 200 further has an adaptive control unit 240. The adaptive control unit 240 is an actual adjusting authority and is configured for adjusting a second adjustable actual configuration parameter. The adaptive control unit 240 is also a licensed adjusting authority.

The adaptive control unit 240 adjusts the second adjustable actual configuration parameter during operation of the virtualized relay 200 to ensure smooth operation of the substation 10. Similarly to the verification of the consistency by the verification unit 330 in conjunction with the human-machine-interface 230, the consistency is verified for the set of actual configuration parameters 210 including the second adjustable actual configuration parameter and the set of licensed configuration parameters 310 including a second licensed configuration parameter.

In one or more examples, the functions described may be implemented in hardware, software, firmware, or any combination thereof. If implemented in software, the functions may be stored as one or more instructions or code on a computer-readable medium, such as the memory, and executed by a hardware-based processing unit. Computer-readable media may include computer-readable storage media, which corresponds to a tangible medium such as data storage media (e.g., RAM, ROM, EEPROM, flash memory, or any other medium that can be used to store desired program code in the form of instructions or data structures and that can be accessed by a computer).

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry.

Thus, a substation, a method for operating a substation and the use of a licensing module according to the disclosure in a substation have been presented in the foregoing description with reference to specific examples. It is to be understood that various aspects disclosed herein may be combined in different combinations than the specific combinations presented in the accompanying drawings. It is appreciated that various modifications to the referenced examples may be made without departing from the scope of the disclosure and the following claims.

## Claims

1. A substation (10), comprising
a virtualized relay (200) for operating the substation (10) with a set of actual configuration parameters (210); and
a licensing module (300) being configured for:
verifying a consistency between the set of actual configuration parameters (210) and a set of licensed configuration parameters (310);
blocking operation of the virtualized relay (200) with the set of actual configuration parameters; and
releasing operation of the virtualized relay (200) with the set of actual configuration parameters upon successful verification of the consistency.

2. The substation (10) of claim 1, wherein the licensing module (300) comprises a memory (320) having stored thereon a cryptographic proof (340), the cryptographic proof (340) being generated using the set of licensed configuration parameters (310), and wherein the licensing module (300) further comprises a verification unit (330) being configured for verifying the consistency between the set of actual configuration parameters (210) and the cryptographic proof (340).

3. The substation (10) of claim 2, wherein the cryptographic proof (340) is based on at least one public key (343) and at least one corresponding private key (342), wherein the at least one public key (343) and the corresponding at least one private key (342) are related to each other, and wherein the at least one public key (343) is stored on the memory (320).

4. The substation (10) of claim 3, wherein the cryptographic proof (340) comprises at least one signature (341) being generated using the at least one private key (342), and wherein the verification unit (330) further comprises a decryption unit (331) being configured for decrypting the at least one signature (341) using the at least one corresponding public key (343).

5. The substation (10) of claim 4, wherein the at least one signature (341) includes at least one licensed identifier, in particular at least one licensed hash identifier, being based on the set of licensed configuration parameters (310) and being encrypted by the at least one private key (342), and wherein the verification unit (330) is further configured for comparing at least one actual identifier, in particular at least one actual hash identifier, being based on the set of actual configuration parameters (210), to the at least one licensed identifier, in particular to the at least one licensed hash identifier.

6. The substation (10) of any of the preceding claims, wherein the virtualized relay (200) and/or the licensing module (300) comprises a start-up routine being configured for resetting the licensing module (300) to blocking operation of the virtualized relay (200) with the set of actual configuration parameters and/or wherein the virtualized relay (200) comprises an operation routine being configured for querying and receiving verification of the consistency from the licensing module (300) during operation of the substation (10), in particular periodically during operation of the substation (10).

7. The substation (10) of any of the preceding claims, wherein the set of licensed configuration parameters (310) is a subset of a total set of configuration parameters (220) of the substation (10).

8. The substation (10) of any of the preceding claims, wherein the set of licensed configuration parameters (310) includes at least one parameter being related to a physical setup of the substation (10) as part of a distribution grid and/or at least one parameter being related to settings and configurations of protection and control applications of the substation (10).

9. The substation (10) of any of the preceding claims, wherein at least one parameter of the set of licensed configuration parameters (310) is a value, a range of values or a list of values.

10. The substation (10) of any of the preceding claims, wherein the set of licensed configuration parameters (310) includes at least one adjustable licensed configuration parameter, and wherein at least one actual adjusting authority is configured for adjusting at least one corresponding adjustable actual configuration parameter.

11. The substation (10) of claim 10, wherein the licensing module (300) is further configured for verifying that the at least one actual adjusting authority corresponds to a licensed adjusting authority.

12. The substation (10) of any of claims 10-11, wherein the virtualized relay (200) comprises a human-machine-interface (230) and/or wherein the virtualized relay (200) comprises an adaptive control unit (240), and wherein the human-machine-interface (230) and/or the adaptive control unit (240) is an actual adjusting authority being configured for adjusting the at least one adjustable actual configuration parameter.

13. A method for operating a substation (10), being configured by a set of actual configuration parameters (210), comprising the steps:
verifying a consistency between the set of actual configuration parameters (210) and a set of licensed configuration parameters (310);
upon successful consistency verification,
confirming validity of a software license, thereby releasing operation of a virtualized relay (200) of the substation (10); and
operating the virtualized relay (200) with the set of actual configuration parameters (210).

14. The method of claim 13, wherein the consistency is verified between the set of actual configuration parameters (210) and a cryptographic proof (340) being generated using the set of licensed configuration parameters (310) and being stored on a memory (320) of the substation (10).

15. Use of a licensing module (300) according to any of claims 1-12 for a substation (10).
